# EUROPÄISCHE PATENTSCHRIFT

(11) **EP 2 982 899 B1**
(45) Veröffentlichungstag und Bekanntmachung des Hinweises auf die Patenterteilung: **17.05.2017**
(21) Anmeldenummer: 15179811.3
(22) Anmeldetag: 05.08.2015
(51) Int. Cl.: F21S 8/00, F21V 8/00

(54) **FLÄCHIGE AUSSTELLUNGSLEUCHTE**
FLAT EXHIBITION LIGHT
ÉCLAIRAGE PLAT DE PRESENTATION

(30) Priorität: 07.08.2014 DE 202014103671 U
(43) Veröffentlichungstag der Anmeldung: 10.02.2016
(73) Patentinhaber: Zumtobel Lighting GmbH, 6850 Dornbirn (AT)
(72) Erfinder: Lonsdale, Julian, 6900 Bregenz (AT)
(74) Vertreter: Kiwit, Benedikt

(56) Entgegenhaltungen:
- EP-A1- 0 697 560
- WO-A1-2012/152536
- WO-A1-2013/128761
- WO-A1-2014/021456
- DE-A1- 4 205 137
- US-A1- 2004 213 003

## Beschreibung

Die Erfindung betrifft eine Leuchte, insbesondere eine Leuchte zur gleichzeitigen Abgabe von diffusem und gerichtetem Licht.

Herkömmlicherweise werden getrennte Leuchten zur Bereitstellung von diffusem und gerichtetem Licht genutzt. Zur Bereitstellung von diffusem Licht ist es bekannt, einen Lichtleiter seitlich anzustrahlen, dessen Oberfläche z.B. aufgeraut ist, um einen diffusen Lichtaustritt zu ermöglichen. So zeigt beispielsweise das deutsche Gebrauchsmuster DE 20 2007 003 819 U1 eine zuvor beschriebene Leuchte zur Bereitstellung von diffusem Licht.DE 42 05 137 A1 offenbart eine Leuchte wobei die Blendung bei direktem Einblick durch Reduzierung einer diffuse Lichtabgabe reduziert wird. Das seitlich in den Lichtleiter eingeleitete Licht wird in der Regel, sofern es nicht als diffuses Licht über die Lichtabgabeseite abgestrahlt wird, mittels Totalreflektion durch den gesamten Lichtleiter geleitet und kommt schließlich an der gegenüberliegenden Seite des Lichtleiters bezüglich der Lichteinkoppelseite an. Dort wird es in der Regel mittels Reflektorelementen zurück in den Lichtleiter geschickt, um dort für die diffuse Lichtabgabe bereitzustehen. Dabei kann das Licht zum Teil an der gegenüberliegenden Seite austreten, ohne für die Lichtabgabe direkt genutzt zu werden. Dies sorgt für eine geringe Effizienz des Gesamtsystems.

Zur Bereitstellung gerichteten Lichts ist darüber hinaus der Einsatz von Strahlern bekannt. Auch der Einsatz von Reflektoren zur gezielten Beleuchtung ist bekannt.

Um jedoch eine Kombination von diffusem und gerichtetem Licht zu erzielen, ist es bislang notwendig, zumindest eine Leuchte zur Bereitstellung diffusen Lichts und eine Leuchte zur Bereitstellung gerichteten Lichts gleichzeitig zu nutzen. Dies erzeugt einen nennenswerten Aufwand.

Der Erfindung liegt die Aufgabe zu Grunde, eine Leuchte zu schaffen, welche gleichzeitig diffuses und gerichtetes Licht abgeben kann.

Die Aufgabe wird erfindungsgemäß für die Vorrichtung durch die Merkmale der unabhängigen Ansprüche 1 und 8 gelöst.

Vorteilhafte Weiterbildungen sind Gegenstand der hierauf rückbezogenen Unteransprüche.

Eine erfindungsgemäße Leuchte verfügt über einen flächigen Lichtleiter, einen Reflektor und ein Leuchtmittel. Bei dem Leuchtmittel handelt es sich bevorzugt um eine LED oder mehrere LEDs. Das Leuchtmittel ist dabei derart an einer ersten Stirnseite des Lichtleiters angeordnet, dass von dem Leuchtmittel erzeugtes Licht an der ersten Stirnseite in den Lichtleiter eintritt und von dem Lichtleiter diffus gestreut über eine flächige Lichtabgabeseite des Lichtleiters einer Lichtabgabeseite der Leuchte abgegeben wird. Der Reflektor ist dabei derart an einer, der ersten Stirnseite vorzugsweise gegenüberliegenden zweiten Stirnseite des Lichtleiters angeordnet, das an der zweiten Stirnseite aus dem Lichtleiter austretendes Licht des Leuchtmittels von dem Reflektor reflektiert und gerichtet über die Lichtabgabeseite der Leuchte abgegeben wird. Es ist somit möglich, durch Nutzung lediglich einer einzelnen Leuchte mit lediglich einem einzelnen Leuchtmittel gleichzeitig eine diffuse und gerichtete Lichtabgabe zu erzielen.

Vorzugsweise verfügt die Leuchte dabei über ein Leuchtengehäuse, in welchem der Lichtleiter, das Leuchtmittel und der Reflektor angeordnet sind. Eine Innenseite des Leuchtengehäuses ist dabei im Bereich des Lichtleiters derart reflektierend ausgebildet, dass sie von dem Lichtleiter abgestrahltes Licht des Leuchtmittels zurück in den Lichtleiter reflektiert. Optional kann dabei der Reflektor als Teil des Leuchtengehäuses ausgebildet sein. So lässt sich eine Erhöhung der Lichtausbeute und damit der Gesamteffizienz der Leuchte erzielen.

Bevorzugt verfügt dabei der Lichtleiter auf seiner der Lichtabgabeseite zugewandten und/oder abgewandten Seite über ein Auskoppelelement, wie eine aufgeraute oder reflektierende Oberfläche oder eine strukturierte Oberfläche oder eine Auskoppelschicht. Zusätzlich oder alternativ verfügt der Lichtleiter an der zweiten Stirnseite über eine, den Lichtaustritt fördernde Oberflächenstruktur, bevorzugt eine polierte Oberfläche. Durch beide Maßnahmen wird eine weitere Erhöhung der Lichtausbeute erzielt.

Bevorzugt verfügt der Reflektor über ein Lamellenraster, welches ausgebildet ist, um eine Entblendung des gerichtet seitlich reflektierten Lichts durchzuführen. So wird erreicht, dass trotz der Richtcharakteristik des reflektierten Lichts, keine Blendung auftritt.Erfindungsgemäss weist die Leuchte dabei ein weiteres Leuchtmittel, bevorzugt eine LED oder mehrere LEDs auf, welches an der zweiten Stirnseite des Lichtleiters angebracht ist. Die Leuchte weist dann einen weiteren Reflektor auf, welcher an der ersten Stirnseite des Lichtleiters angebracht ist. So lässt sich die Lichtabgabe erhöhen und gleichzeitig die Homogenität der diffusen Lichtabgabe steigern.

Vorzugsweise ist das weitere Leuchtmittel dabei derart an der zweiten Stirnseite des Lichtleiters angeordnet, dass von dem weiteren Leuchtmittel erzeugtes Licht an der zweiten Stirnseite in den Lichtleiter eintritt und von dem Lichtleiter diffus gestreut über die flächige Lichtabgabeseite abgegeben wird. Der weitere Reflektor ist dabei derart an der ersten Stirnseite angeordnet, dass an der ersten Stirnseite aus dem Lichtleiter austretendes Licht des weiteren Leuchtmittels von dem weiteren Reflektor reflektiert und gerichtet über die Lichtabgabeseite der Leuchte abgegeben wird. Auch durch diese Maßnahmen wird die Beleuchtungsstärke erhöht und gleichzeitig die Homogenität der diffusen Beleuchtung verbessert.

Bevorzugt ist dabei die erste Stirnseite von dem Leuchtmittel lediglich teilweise verdeckt, sodass von dem weiteren Leuchtmittel in den Lichtleiter abgestrahltes Licht und an der ersten Stirnseite austretendes Licht zumindest teilweise von dem weiteren Reflektor reflektiert und gerichtet über die Lichtabgabeseite der Leuchte abgegeben wird. Weiterhin ist die zweite Stirnseite von dem weiteren Leuchtmittel lediglich teilweise verdeckt, sodass von dem Leuchtmittel in den Lichtleiter abgestrahltes und an der zweiten Stirnseite austretendes Licht zumindest teilweise von dem Reflektor reflektiert und gerichtet über die Lichtabgabeseite der Leuchte abgegeben wird. So wird sichergestellt, dass nicht sämtliches von den Leuchtmitteln erzeugtes und seitlich aus dem Lichtleiter austretendes Licht von den gegenüberliegenden Leuchtmitteln geschluckt wird, sondern zu den Reflektoren gelangt. Eine erhöhte Lichtausbeute wird so erreicht.

Bevorzugt ist die Leuchte dabei derart aufgebaut, dass der Reflektor und/oder der weitere Reflektor austauschbar sind. Mittels unterschiedlich gestalteter Reflektoren können dabei unterschiedliche gewünschte Richtcharakteristiken des von den Reflektoren reflektierten Lichts realisiert werden. Eine große Flexibilität des Einsatzes der Leuchte wird so erreicht.

Eine weitere erfindungsgemässe Leuchtenanordnung beinhaltet zwei zuvor beschriebene Leuchten. Die Leuchten sind dabei in einer Ebene derart angeordnet, dass die Leuchtmittel Licht in entgegengesetzte Richtungen abstrahlen und dass die Lichtleiter und Reflektoren der Leuchten Licht auf einer gemeinsamen Seite der Ebene ausgeben.

Ein bevorzugtes Beleuchtungssystem beinhaltet dabei eine Stromschiene, eine Elektronikeinheit, eine Halterung und eine zuvor beschriebene Leuchte oder eine zuvor beschriebene Leuchtenanordnung. Die Stromschiene wird dabei an einer Oberfläche z.B. einer Decke befestigt und trägt die Elektronikeinheit. Die Elektronikeinheit trägt mittels der Halterung die Leuchte bzw. Leuchtenanordnung. So kann eine sehr einfache Herstellung des Leuchtensystems erreicht werden.

Der Lichtleiter ist vorzugsweise, aus
Polymethylmethacrylat (PMMA) hergestellt.

Nachfolgend wird die Erfindung anhand der Figuren der Zeichnungen, in der vorteilhafte Ausführungsbeispiele der Erfindung dargestellt sind, beispielhaft beschrieben. In den Zeichnungen zeigen:
- Fig. 1: ein erstes Ausführungsbeispiel des erfindungsgemäßen Leuchtensystems mit einem ersten Ausführungsbeispiel der erfindungsgemäßen Leuchte in verschiedenen Ansichten;
- Fig. 2: ein zweites Ausführungsbeispiel der erfindungsgemäßen Leuchte in einer Schnittdarstellung;
- Fig. 3: ein drittes Ausführungsbeispiel der erfindungsgemäßen Leuchte in einer Schnittdarstellung, und
- Fig. 4: ein erstes Ausführungsbeispiel der erfindungsgemäßen Leuchtenanordnung mit einem vierten Ausführungsbeispiel der erfindungsgemäßen Leuchte in einer Schnittdarstellung.

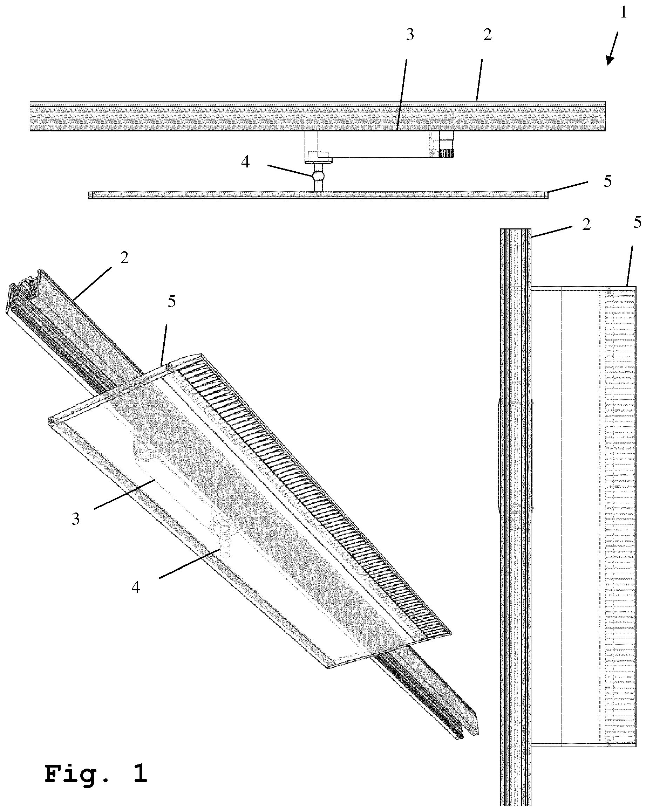

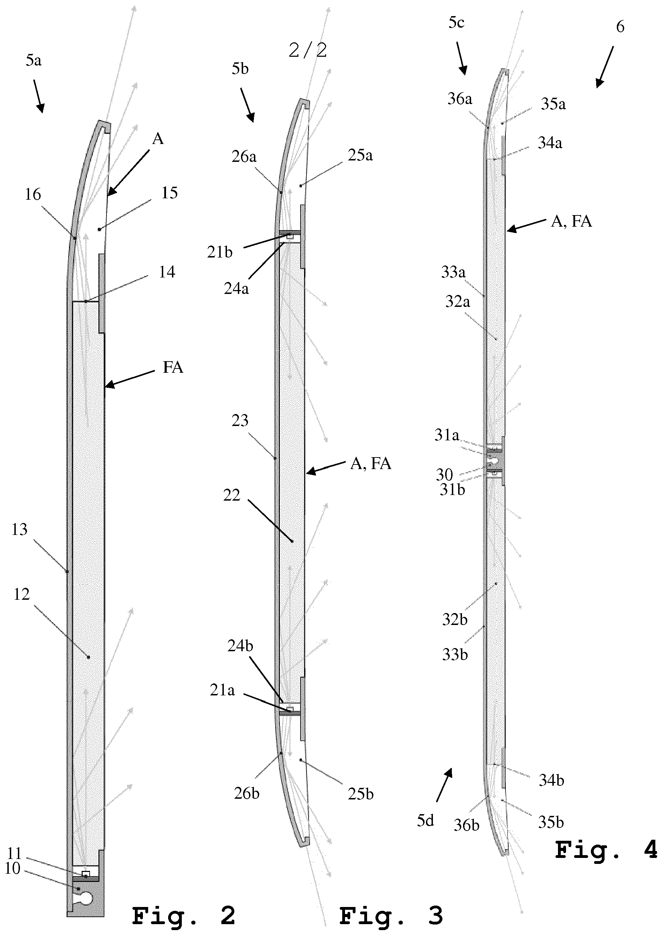

Zunächst wird anhand von Fig. 1 der generelle Aufbau und die generelle Funktionsweise eines Ausführungsbeispiels des erfindungsgemäßen Leuchtensystems erläutert. Anhand von Fig. 2 - 4 wird anschließend auf die Funktionsweise und den Aufbau verschiedener Ausführungsbeispiele der erfindungsgemäßen Leuchte bzw. Leuchtenanordnung eingegangen. Identische Elemente wurden in ähnlichen Abbildungen z.T. nicht wiederholt dargestellt und beschrieben.

In Fig. 1 ist ein Ausführungsbeispiel des erfindungsgemäßen Leuchtensystems 1 dargestellt. In der oberen Ansicht ist eine seitliche Darstellung gezeigt. In der linken unteren Ansicht ist eine dreidimensionale Darstellung gezeigt. In der rechten unteren Ansicht ist eine Draufsicht gezeigt. Das Leuchtensystem 1 beinhaltet eine Stromschiene 2, welche mit einer Elektronikeinheit 3 verbunden ist, welche mittels einer Halterung 4 eine Leuchte 5 trägt. Die Leuchte 5 ist dabei flächig angeordnet und strahlt Licht nach unten ab. D.h. die Leuchte 5 strahlt Licht in die der Halterung 4, der Elektronikeinheit 3 und Stromschiene 2 abgewandte Richtung ab. Hinsichtlich des genauen Aufbaus der Leuchte 5 wird auf die Ausführungen zu Fig. 2 - 4 verwiesen. In Fig. 2 ist ein Ausführungsbeispiel der Leuchte 5a dargestellt. Hier gezeigt ist eine Schnittansicht. Die Lichtabstrahlrichtung ist dabei nach rechts. Die Leuchte 5a beinhaltet dabei ein Gehäuse 13, beispielsweise ein Aluminiumgehäuse. Das Gehäuse 13 umfasst dabei ein Profil 10, vorzugsweise ein Aluminiumprofil, mittels welchem die Leuchte 5a an der Halterung 4 aus Fig. 1 befestigt werden kann. Innerhalb des Gehäuses 13 ist dabei ein Leuchtmittel 11, bevorzugt eine LED oder ein LED-Modul mit mehreren LEDs angeordnet. Darüber hinaus ist innerhalb des Gehäuses 13 ein (flächiger) Lichtleiter 12 mit flächiger Lichtabgabeseite FA angeordnet. Weiterhin umfasst das Gehäuse 13 einen Reflektor 16 und ein Lamellenraster 5. Der Reflektor 16 kann dabei als Teil des Gehäuses 13 ausgebildet oder lösbar mit dem Gehäuse 13 verbunden sein.

Von dem Leuchtmittel 11 abgestrahltes Licht tritt in den Lichtleiter 12 ein. Der Lichtleiter 12 leitet das Licht und strahlt es in Abstrahlrichtung - nach rechts - ab. Um die diffuse Lichtabstrahlung durch den Lichtleiter 12 zu fördern, weist der Lichtleiter 12 vorzugsweise ein Auskoppelelement bzw. eine Auskoppelstruktur, wie eine aufgeraute Oberfläche oder eine strukturierte Oberfläche oder eine Auskoppelschicht oder eine (wenigstens teilweise) reflektierende Oberfläche auf seiner der Lichtabgabeseite A zugewandten und/oder abgewandten Seite bzw. Oberfläche auf. Zur Verbesserung der Lichtausbeute ist dabei die Innenseite des Gehäuses 13 im Bereich des Lichtleiters 12 - also dort, wo Gehäuseinnenseite und Lichtleiter in flächigem Kontakt stehen - reflektierend ausgebildet, so dass von dem Leuchtmittel 11 erzeugtes und gegen das Gehäuse 13 strahlendes Licht erneut zurück in den Lichtleiter 12 reflektiert wird.

Das Leuchtmittel 11 ist dabei an einer ersten Stirnseite des Lichtleiters 12 angeordnet. An einer zweiten Stirnseite des Lichtleiters 12, welche vorzugsweise auf einer der ersten Stirnseite gegenüberliegenden Seite des Lichtleiters 12 angeordnet ist, befindet sich vorzugsweise eine den Lichtaustritt fördernde Oberflächenstruktur 14, bevorzugt eine polierte Oberflächenstruktur. Dies sorgt dafür, dass an der zweiten Stirnfläche aus dem Lichtleiter 12 austretendes Restlicht von dem Reflektor 16 in Abstrahlrichtung reflektiert werden kann.

Der Reflektor 16 erzeugt somit gerichtetes Licht in Abstrahlrichtung, während der Lichtleiter 12 diffuses Licht in Abstrahlrichtung erzeugt. Somit kann sowohl diffuses als auch gerichtetes Licht über die Lichtabgabeseite A der Leuchte 5a abgegeben werden. Zur Vermeidung von Blendungseffekten weist der Reflektor 16 darüber hinaus vorzugsweise ein Lamellenraster 15 auf.

Die Reflektoren sind dabei in sämtlichen Ausführungsbeispielen optional austauschbar gestaltet, sodass die Richtcharakteristik durch Einsatz eines geeigneten Reflektors eingestellt werden kann.

In Fig. 3 ist ein weiteres Ausführungsbeispiel der erfindungsgemäßen Leuchte 5b dargestellt. Die Leuchte 5b weist dabei ein Gehäuse 23 und einen Lichtleiter 22 auf. Weiterhin weist die Leuchte 5b an einer ersten Stirnseite des Lichtstirnseite des Lichtleiters 22 ein erstes Leuchtmittel 21a und an einer zweiten Stirnseite des Lichtleiters 22 ein zweites Leuchtmittel 21b auf. Auch bei diesen Leuchtmitteln 21a, 21b handelt es sich jeweils bevorzugt um zumindest eine LED oder ein LED-Modul mit mehreren LEDs. Die Leuchte 5b weist weiterhin auf der ersten Stirnseite des Lichtleiters 22 eine den Lichtaustritt fördernde Oberfläche 24b und auf der zweiten Stirnseite des Lichtleiters 22 eine den Lichtaustritt fördernde Oberfläche 24a auf. Auch hierbei handelt es sich bevorzugt um polierte Oberflächen. Darüber hinaus weist die Leuchte 5b auf beiden Seiten des Lichtleiters 22 jeweils einen Reflektor 26a, 26b vorzugsweise mit jeweils einem Lamellenelement 25a, 25b auf.

Im Betrieb wird von beiden Leuchtmitteln 21a und 21b Licht erzeugt und in entgegengesetzter Richtung in den Lichtleiter 22 eingestrahlt. Der Lichtleiter 22 strahlt dabei diffuses Licht in Abstrahlrichtung ab. Auch hier ist bevorzugt die Innenseite des Gehäuses 23 im Bereich des Lichtleiters 22 reflektierend ausgebildet. Licht des ersten Leuchtmittels 21a, welches die zweite Stirnseite des Lichtleiters 22 erreicht, verlässt dort den Lichtleiter über die Oberfläche 24a und wird von dem Reflektor 26a als gerichtetes Licht in Abstrahlrichtung reflektiert. Von dem zweiten Leuchtmittel 21b erzeugtes Licht, welches durch den Lichtleiter 22 die Oberfläche 24b erreicht, verlässt dort den Lichtleiter 22 und wird von dem Reflektor 26b in Abstrahlrichtung als gerichtetes Licht reflektiert. Damit eine nennenswerte Lichtausbeute des gerichteten Lichts erreicht werden kann, sind dabei die Leuchtmittel 21a und 21b so ausgeführt, dass sie lediglich einen geringen Teil des Querschnitts der Leuchte 5b einnehmen. D.h. ein nennenswerter Teil des aus dem Lichtleiter 22 an den Oberflächen 24a und 24b austretenden Lichts kann die Leuchtmittel 21a und 21b passieren und von den Reflektoren 26a und 26b reflektiert werden.

In Fig. 4 sind zwei Leuchten 5c, 5d gemäß eines weiteren Ausführungsbeispiels dargestellt. Die Leuchten 5c, 5d bilden eine Leuchtenanordnung 6. Die Leuchte 5c umfasst dabei ein Profil 30, ein Leuchtmittel 31a, ein optimales Gehäuse 33a, einen Lichtleiter 32a, eine den Lichtaustritt fördernde optimale Oberfläche 34a, einen Reflektor 36a und ein optimales Lamellenelement 35a. Die Funktion entspricht dabei der Funktion der Leuchte 5a aus Fig. 2. Die Leuchte 5c teilt sich dabei ein gemeinsames Profil 30, vorzugsweise ein Aluminiumprofil mit der Leuchte 5d, welche über ein Leuchtmittel 31b, ein Gehäuse 33b, einen Lichtleiter 32b, einen Reflektor 36b, eine den Lichtaustritt fördernde Oberfläche 34b und ein Lamellenelement 35b verfügt. Auch die Funktion der Leuchte 5d entspricht dabei der Funktion der Leuchte 5a aus Fig. 2. Durch die "Rücken-an-Rücken"-Montage zweier Leuchten 5c, 5d wird die Lichtleistung der Leuchtenanordnung gegenüber der Lichtleistung einer einzigen Leuchte verdoppelt. Gleichzeitig wird ein symmetrischer Aufbau erreicht, welcher für zahlreiche Anwendungen wünschenswert ist. Darüber hinaus wird der Effizienzverlust, wie er bei einer Leuchte 5b gemäß Fig. 3 aufgrund der Verdeckung eines Teils der Stirnseiten des Lichtleiters 22 auftritt, vermieden.

Die Erfindung ist dabei nicht auf das dargestellte Ausführungsbeispiel beschränkt. Neben LEDs als Leuchtmitteln können auch herkömmliche Glühlampen, Halogenlampen, Leuchtstoffröhren, etc. eingesetzt werden. Auch kann anstatt eines Lamellenrasters ein alternatives optimales Entblendungselement genutzt werden.

Alle vorstehend beschriebenen Merkmale oder in den Figuren gezeigten Merkmale sind im Rahmen der Erfindung beliebig vorteilhaft miteinander kombinierbar, soweit sie vom Gegenstand der folgenden Ansprüche erfasst sind und insbesondere eine kombinierte Lichtabgabe von diffusem und gerichtetem Licht ermöglichen.

## Patentansprüche

1. Leuchte (5b) mit einem flächigen Lichtleiter (22) , einem Reflektor (26a) und einem Leuchtmittel (21a) , bevorzugt zumindest einer LED,
wobei das Leuchtmittel (21a) derart an einer ersten Stirnseite des Lichtleiters (22) angeordnet ist, dass von dem Leuchtmittel (21a) erzeugtes Licht an der ersten Stirnseite in den Lichtleiter (22) eintritt und von dem Lichtleiter (22) diffus gestreut über eine flächige Lichtabgabeseite (FA) des Lichtleiters einer Lichtabgabeseite (A) der Leuchte (5a) abgegeben wird,
wobei der Reflektor (26a) derart an einer, der ersten Stirnseite vorzugsweise gegenübergelegenen zweiten Stirnseite des Lichtleiters (22) angeordnet ist, dass an der zweiten Stirnseite aus dem Lichtleiter (22) austretendes Licht des Leuchtmittels (21a) von dem Reflektor (26a) reflektiert und gerichtet über die Lichtabgabeseite (A) der Leuchte (5b) abgegeben wird,
wobei die Leuchte (5b) ein weiteres Leuchtmittel (21b), bevorzugt zumindest eine LED, aufweist, welches an der zweiten Stirnseite des Lichtleiters (22) angebracht ist, und
wobei die Leuchte (5b) einen weiteren Reflektor (26b) aufweist, welcher an der ersten Stirnseite des Lichtleiters (22) angebracht ist.

2. Leuchte (5b) nach Anspruch 1,
**dadurch gekennzeichnet,**
**dass** die Leuchte (5b) über ein Leuchtengehäuse (23) verfügt, in welchem der Lichtleiter (22), das Leuchtmittel (21a,21b) und der Reflektor (26a, 26b) angeordnet sind, und dass eine Innenseite des Leuchtengehäuses (23) im Bereich des Lichtleiters (22) derart reflektierend ausgebildet ist, dass sie von dem Lichtleiter (22) abgestrahltes Licht des Leuchtmittels (21a, 21b) zurück in den Lichtleiter (22) reflektiert.

3. Leuchte (5b) nach Anspruch 1 oder 2, **dadurch gekennzeichnet, dass** der Lichtleiter (22) auf seiner der Lichtabgabeseite (FA) zugewandten oder abgewandten Seite ein Auskoppelelement, wie eine aufgeraute Oberfläche oder eine strukturierte Oberfläche oder eine Auskoppelschicht oder eine reflektierende Oberfläche, aufweist, und/oder dass der Lichtleiter (22) an der zweiten Stirnseite eine den Lichtaustritt fördernde Oberflächenstruktur, bevorzugt eine polierte Oberfläche (24b), aufweist.

4. Leuchte (5b) nach einem der Ansprüche 1 bis 3, **dadurch gekennzeichnet, dass** der Reflektor (26a, 26b) ein Lamellenraster aufweist, welches ausgebildet ist, um eine Entblendung des gerichtet seitlich reflektierten Lichts durchzuführen.

5. Leuchte (5b) nach einem der Ansprüche 1 bis 4,
**dadurch gekennzeichnet,**
**dass** das weitere Leuchtmittel (21b) derart an der zweiten Stirnseite des Lichtleiters (22) angeordnet ist, dass von dem weiteren Leuchtmittel (21b) erzeugtes Licht an der zweiten Stirnseite in den Lichtleiter (22) eintritt und von dem Lichtleiter (22) diffus gestreut über die flächige Lichtabgabeseite (FA) abgegeben wird,
**dass** der weitere Reflektor (26b) derart an der ersten Stirnseite angeordnet ist, dass an der ersten Stirnseite aus dem Lichtleiter (22) austretendes Licht des weiteren Leuchtmittels (21b) von dem weiteren Reflektor (26b) gerichtet seitlich reflektiert und gerichtet über die Lichtabgabeseite (A) der Leuchte (5b) abgegeben wird.

6. Leuchte (5b) nach einem der Ansprüche 1 bis 5,
**dadurch gekennzeichnet,**
**dass** die erste Stirnseite von dem Leuchtmittel (21a) lediglich teilweise verdeckt ist, sodass von dem weiteren Leuchtmittel (21b) in den Lichtleiter (22) abgestrahltes und an der ersten Stirnseite austretendes Licht zumindest teilweise von dem weiteren Reflektor (26b) reflektiert und gerichtet über die Lichtabgabeseite (A) der Leuchte (5b) abgegeben wird, und
**dass** die zweite Stirnseite von dem weiteren Leuchtmittel (21b) lediglich teilweise verdeckt ist, sodass von dem Leuchtmittel (21a) in den Lichtleiter (22) abgestrahltes und an der zweiten Stirnseite austretendes Licht zumindest teilweise von dem Reflektor (26a) und gerichtet über die Lichtabgabeseite (A) der Leuchte (5b) abgegeben reflektiert wird.

7. Leuchte (5b) nach einem der Ansprüche 1 bis 6, **dadurch gekennzeichnet,**
**dass** die Leuchte (5b) derart aufgebaut ist, dass der Reflektor (26a) und/oder der weitere Reflektor (26b) austauschbar sind, und dass mittels unterschiedlich gestalteter Reflektoren (26a, 26b) unterschiedliche Richtcharakteristiken des von den Reflektoren reflektierten Lichts realisierbar sind.

8. Leuchtenanordnung (6) mit zwei Leuchten (5c, 5d), wobei die Leuchten (5c, 5d) jeweils einen flächigen Lichtleiter (32a, 32b), einen Reflektor (36a, 36b) und ein Leuchtmittel (31a, 31b), bevorzugt zumindest eine LED, aufweisen,
wobei das Leuchtmittel (31a, 31b) derart an einer ersten Stirnseite des Lichtleiters (32a, 32b) angeordnet ist, dass von dem Leuchtmittel (31a, 31b) erzeugtes Licht an der ersten Stirnseite in den Lichtleiter (32a, 32b) eintritt und von dem Lichtleiter (32a, 32b) diffus gestreut über eine flächige Lichtabgabeseite (FA) des Lichtleiters (32a, 32b) einer Lichtabgabeseite (A) der Leuchte (5c, 5d) abgegeben wird,
wobei der Reflektor (36a, 36b) derart an einer, der ersten Stirnseite vorzugsweise gegenübergelegenen zweiten Stirnseite des Lichtleiters (32a, 32b) angeordnet ist, dass an der zweiten Stirnseite aus dem Lichtleiter (32a, 32b) austretendes Licht des Leuchtmittels (31a, 31b) von dem Reflektor (36a, 36b) reflektiert und gerichtet über die Lichtabgabeseite (A) der Leuchte (5c, 5d) abgegeben wird,
wobei die zwei Leuchten (5c, 5d) in einer Ebene derart angeordnet sind, dass die Leuchtmittel (31a, 31b) der Leuchten (5c, 5d) Licht in entgegengesetzte Richtungen abstrahlen, und dass die Lichtleiter (32a, 32b) und Reflektoren (36a, 36b) der Leuchten (5c, 5d) Licht auf einer gemeinsamen Seite der Ebene ausgeben.

9. Leuchtenanordnung (6) nach Anspruch 8,
**dadurch gekennzeichnet,**
**dass** die Leuchten (5c, 5d) über ein Leuchtengehäuse (33a, 33b) verfügen, in welchem der Lichtleiter (32a, 32b), das Leuchtmittel (31a, 31b) und der Reflektor (36a, 36b) angeordnet sind, und
**dass** eine Innenseite des Leuchtengehäuses (33a, 33b) im Bereich des Lichtleiters (32a, 32b) derart reflektierend ausgebildet ist, dass sie von dem Lichtleiter (32a, 32b) abgestrahltes Licht des Leuchtmittels (31a, 31b) zurück in den Lichtleiter (32a, 32b) reflektiert.

10. Leuchtenanordnung (6) nach Anspruch 8 oder 9,
**dadurch gekennzeichnet,**
**dass** die Lichtleiter (32a, 32b) auf ihrer der Lichtabgabeseite (FA) zugewandten oder abgewandten Seite ein Auskoppelelement, wie eine aufgeraute Oberfläche oder eine strukturierte Oberfläche oder eine Auskoppelschicht oder eine reflektierende Oberfläche, aufweisen, und/oder dass die Lichtleiter (32a, 32b) an der zweiten Stirnseite eine den Lichtaustritt fördernde Oberflächenstruktur, bevorzugt eine polierte Oberfläche (34a, 34b), aufweisen.

11. Leuchtenanordnung (6) nach einem der Ansprüche 8 bis 10,
**dadurch gekennzeichnet,**
**dass** die Reflektoren (36a, 36b) ein Lamellenraster aufweisen, welches ausgebildet ist, um eine Entblendung des gerichtet seitlich reflektierten Lichts durchzuführen.

12. Leuchtensystem (1) mit einer Stromschiene (2), einer Elektronikeinheit (3), einer Halterung (4) und einer Leuchte (5) nach einem der Ansprüche 1 bis 7 oder einer Leuchtenanordnung (6) nach einem der Ansprüche 8 bis 11,
**dadurch gekennzeichnet,**
**dass** die Stromschiene (2) die Elektronikeinheit (3) trägt, und
**dass** die Elektronikeinheit (3) mittels der Halterung (4) die Leuchte (5) bzw. Leuchtenanordnung (6) trägt.

## Claims

1. Luminaire (5b) with a flat light guide (22), a reflector (26a) and a light source (21a), preferably at least one LED,
wherein the light source (21a) is so arranged on a first end face of the light guide (22) that light generated by the light source (21a) enters the light guide (22) at the first end face and is scattered diffusely from the light guide (22) via a flat light output side (FA) of the light guide of a light output side (A) of the luminaire (5a),
wherein the reflector (26a) is arranged on a second end face of the light guide (22), preferably located opposite the first end face, in such a way that light from the light source (21a) emitted from the light guide (22) on the second end face is reflected and directed by the reflector (26a) via the light output side (A) of the luminaire (5b),
wherein the lamp (5b) has a further light source (21b), preferably at least one LED, which is mounted on the second end face of the light guide (22), and
wherein the lamp (5b) comprises a further reflector (26b) which is mounted on the first end face of the light guide (22).

2. Luminaire (5b) according to claim 1,
**characterized in that**
the luminaire (5b) has a luminaire housing (23) in which the light guide (22), the light source (21a, 21b) and the reflector (26a, 26b) are arranged, and that an inner side of the luminaire housing (23) in the region of the light guide (22) is so reflectively designed that it reflects the light of the light source (21a, 21b) emitted from the light guide (22) back into the light guide (22).

3. Luminaire (5b) according to claim 1 or 2,
**characterized in that**
the light guide (22) has an out-coupling element, such as a roughened surface or a structured surface or an out-coupling layer or a reflecting surface, on its side facing towards or facing away from the light output side (FA), and/or the light guide (22) has a surface structure, preferably a polished surface (24b), on the second end side which promotes the light emission.

4. Luminaire (5b) according to claim 1 to 3,
**characterized in that**
the reflector (26a, 26b) has a lamella grid, which is designed to suppress glare of the laterally reflected light.

5. Luminaire (5b) according to claim 1 to 4,
**characterized in that**
the further light source (21b) is arranged on the second end face of the light guide (22) in such a way that light generated by the further light source (21b) enters the light guide (22) at the second end face and is scattered diffusely from the light guide (22) via the flat light output side (FA),
the further reflector (26b) is so arranged on the first end face that light from the further light source (21b) emerging from the light guide (22) at the first end side is laterally reflected by the further reflector (26b) and directed via the light output side (A) of the luminaire (5b).

6. Luminaire (5b) according to claim 1 to 5,
**characterized in that**
the first end face is only partly covered by the light source (21a), so that light radiated from the further light source (21b) into the light guide (22) and emerging at the first end face is at least partially reflected by the further reflector (26b) and directed via the light output side (A) of the luminaire (5b), and
the second end face is only partly covered by the further light source (21b), so that light radiated from the light source (21a) into the light guide (22) and emerging at the second end face is at least partly reflected by the reflector (26a) and directed via the light output side (A) of the luminaire (5b).

7. Luminaire (5b) according to claim 1 to 6,
**characterized in that**
the luminaire (5b) is so designed that the reflector (26a) and/or the further reflector (26b) are interchangeable, and different directional characteristics of the light reflected by the reflectors may be achieved by means of differently designed reflectors (26a, 26b).

8. Luminaire arrangement (6) with two luminaires (5c, 5d),
wherein the luminaires (5c, 5d) have a flat optical light guide (32a, 32b), a reflector (36a, 36b) and a light source (31a, 31b), preferably at least one LED,
wherein the light source (31a, 31b) is so arranged on a first end face of the light guide (32a, 32b), that light generated by the light source (31a, 31b) enters the optical waveguide at the first end face and is scattered diffusely from the light guide (32a, 32b) via a flat light output side (FA) of the light guide (32a, 32b) to a light output side (A) of the lamp (5c, 5d),
wherein the reflector (36a, 36b) is so arranged on a second end face of the light guide (32a, 32b), preferably located opposite the first end face, that the light of the light source (31a, 31b) emerging from the light guide (32a, 32b) at the second end face is reflected by the reflector (36a, 36b) and directed via the light output side (A) of the luminaire (5c, 5d),
wherein the two luminaires (5c, 5d) are so arranged in a plane that the light source (31a, 31b) of the luminaires (5c, 5d) emit light in opposite directions, and the light guide (32a, 32b) and reflectors (36a, 36b) of the luminaires (5c, 5d) emit light on a common side of the plane.

9. Luminaire arrangement (6) according to claim 8,
**characterized in that**
the luminaires (5c, 5d) have a luminaire housing (33a, 33b) in which the light guide (32a, 32b), the light source (31a, 31b) and the reflector (36a, 36b) are arranged,
an inner side of the luminaire housing (33a, 33b) in the region of the light guide (32a, 32b) is so reflectively designed that it reflects the light emitted from the light source (31a, 31b) from the light guide (32a, 32b) back into the light guide (32a, 32b).

10. Luminaire arrangement (6) according to claim 8 or 9,
**characterized in that**
the light guide (32a, 32b) has an out-coupling element, such as a roughened surface or a structured surface or an out-coupling layer or a reflecting surface, on its side facing towards or facing away from the light output side (FA), and/or the light guide (32a, 32b) has a surface structure, preferably a polished surface (34a, 34b) on the second end side which promotes the light emission.

11. Luminaire arrangement (6) according to one of the claims 8 to 10,
**characterized in that**
the reflectors (36a, 36b) have a lamella grid, which is designed to suppress glare of the laterally reflected light.

12. Luminaire system (1) with a busbar (2), an electronics unit (3), a holder (4) and a luminiare (5) according to one of the claims 1 to 7, or a luminaire arrangement (6) according to one of the claims 8 to 11,
**characterized in that**
the busbar (2) carries the electronic unit (3), and
the electronic unit (3) carries the luminaire (5) or luminaire arrangement (6) by means of the holder (4).

## Revendications

1. Luminaire (5b), avec une fibre optique (22) plate, un réflecteur (26a) et un moyen d'éclairage (21a), de préférence au moins une LED, le moyen d'éclairage (21a) étant disposé au niveau d'un premier côté frontal du de la fibre optique (22), de façon à ce que la lumière générée par le moyen d'éclairage (21a) entre au niveau du premier côté frontal dans la fibre optique (22) et est émise de manière diffuse à l'aide de la fibre optique (22) par l'intermédiaire d'un côté d'émission plat (FA) de la fibre optique d'un côté d'émission de lumière (A) du luminaire (5a), le réflecteur (26a) étant disposé au niveau d'un deuxième côté de la fibre optique (22), de préférence opposé au premier côté, de façon à ce que la lumière du moyen d'éclairage (21a) sortant de la fibre optique (22) au niveau du deuxième côté frontal soit réfléchie par le réflecteur (26a) et émise de manière orientée par l'intermédiaire du côté d'émission de lumière (A) du luminaire (5b), le luminaire (5b) comprenant un autre moyen d'éclairage (21b), de préférence au moins une LED, qui est monté sur le deuxième côté frontal de la fibre optique (22) et le luminaire (5b) comprenant un autre réflecteur (26b) qui est monté sur le premier côté frontal de la fibre optique (22).

2. Luminaire (5b) selon la revendication 1,
**caractérisé en ce que**
le luminaire (5b) dispose d'un boîtier de luminaire (23) dans lequel sont disposés la fibre optique (22), le moyen d'éclairage (21a, 21b) et le réflecteur (26a, 26b) et **en ce qu'**un intérieur du boîtier de luminaire (23) est conçu de manière réfléchissante au niveau de la fibre optique (22) de façon à ce qu'il réfléchisse la lumière du moyen d'éclairage (21a, 21b) émise par la fibre optique (22) vers la fibre optique (22).

3. Luminaire (5b) selon la revendication 1 ou 2, **caractérisé en ce que** la fibre optique (22) comprend, sur son côté orienté ou opposé au côté d'émission de la lumière (FA), un élément de découplage, tel qu'une surface rugueuse ou une surface texturée ou une couche de découplage et/ou **en ce que** la fibre optique (22) comprend, au niveau du deuxième côté frontal, une structure de surface favorisant la sortie de la lumière, de préférence une surface polie (24b).

4. Luminaire (5b) selon l'une des revendications 1 à 3, **caractérisé en ce que** le réflecteur (26a, 26b) comprend une grille à lamelles qui est conçue pour effectuer une protection anti-éblouissement de la lumière réfléchie latéralement.

5. Luminaire (5b) selon l'une des revendications 1 à 4,
**caractérisé en ce que**
l'autre moyen d'éclairage (21b) est disposé au niveau du deuxième côté frontal de la fibre optique (22), de façon à ce que la lumière générée par l'autre moyen d'éclairage (21b) entre au niveau du deuxième côté frontal dans la fibre optique (22) et soit émise de manière diffuse par la fibre optique (22) par l'intermédiaire du côté d'émission de lumière plat (FA),
**en ce que** l'autre réflecteur (26b) est disposé au niveau du premier côté frontal de façon à ce que la lumière sortant de la fibre optique (22) de l'autre moyen d'éclairage (21b) au niveau du premier côté frontal soit réfléchie latéralement par l'autre réflecteur (26b) et émise de manière orientée par l'intermédiaire du côté d'émission de lumière (A) du luminaire (5b).

6. Luminaire (5b) selon l'une des revendications 1 à 5,
**caractérisé en ce que**
le premier côté frontal est au moins partiellement recouvert par le moyen d'éclairage (21a), de façon à ce que la lumière émise par l'autre moyen d'éclairage (21b) vers la fibre optique (22) et sortant au niveau du premier côté frontal est réfléchie au moins partiellement par l'autre réflecteur (26b) et est émise de manière orientée par l'intermédiaire du côté d'émission de lumière (A) du luminaire (5b) et
**en ce que** le deuxième côté frontal est recouvert au moins partiellement par l'autre moyen d'éclairage (21b), de façon à ce que la lumière émise par le moyen d'éclairage (21a) vers la fibre optique (22) et sortant au niveau du deuxième côté frontal soit réfléchie au moins partiellement par le réflecteur (26a) et est émise de manière orientée par l'intermédiaire du côté d'émission de lumière (A) du luminaire (5b).

7. Luminaire (5b) selon l'une des revendications 1 à 6,
**caractérisé en ce que**
le luminaire (5b) est conçu de façon à ce que le réflecteur (26a) et/ou l'autre réflecteur (26b) soient interchangeables et **en ce que** des réflecteurs (26a, 26b) de conceptions différentes permettent de réaliser des caractéristiques d'orientation différentes de la lumière réfléchie par les réflecteurs.

8. Disposition de luminaire (6) avec deux luminaires (5c, 5d), les luminaires (5c, 5d) comprenant chacun une fibre optique plate (32a, 32b), un réflecteur (36a, 36b) et un moyen d'éclairage (31a, 31b), de préférence au moins une LED,
le moyen d'éclairage (31a, 31b) étant disposé sur un premier côté frontal de la fibre optique (32a, 32b) de façon à ce que la lumière générée par le moyen d'éclairage (31a, 31b) entre au niveau du premier côté frontal dans la fibre optique (32a, 32b) et est émise de manière diffusée par la fibre optique (32a, 32b) par l'intermédiaire d'un côté d'émission de lumière plat (FA) de la fibre optique (32a, 32b) d'un côté d'émission de lumière (A) du luminaire (5c, 5d),
le réflecteur (36a, 36b) étant disposé au niveau du deuxième côté frontal, de préférence opposé au premier côté frontal, de la fibre optique (32a, 32b), de façon à ce que la lumière du moyen d'éclairage (31a, 31b) sortant au niveau deuxième côté frontal de la fibre optique (32a, 32b) est réfléchie par le réflecteur (36a, 36b) et est émise de manière orientée par l'intermédiaire du côté d'émission de lumière (A) du luminaire (5c, 5d),
les deux luminaires (5c, 5d) étant disposés dans un plan de façon à ce que les moyens d'éclairage (31a, 31b) des luminaires (5c, 5d) émettent de la lumière dans des directions opposées et à ce que les fibres optiques (32a, 32b) et les réflecteurs (36a, 36b) des luminaires (5c, 5d) émettent de la lumière sur un côté commun du plan.

9. Disposition de luminaires (6) selon la revendication 8,
**caractérisée en ce que**
les luminaires (5c, 5d) disposent d'un boîtier de luminaire (33a, 33b) dans lequel la fibre optique (32a, 32b), le moyen d'éclairage (31a, 31b) et le réflecteur (36a, 36b) sont disposés et
**en ce qu'**un côté intérieur du boîtier de luminaire (33a, 33b) est conçu de manière réfléchissante au niveau de la fibre optique (32a, 32b) de façon à ce qu'elle réfléchisse la lumière du moyen d'éclairage (31a, 31b) émise par la fibre optique (32a, 32b) à nouveau vers la fibre optique (32a, 32b).

10. Disposition de luminaires (6) selon la revendication 8 ou 9,
**caractérisée en ce que**
les fibres optiques (32a, 32b) comprennent, au niveau de leur côté orienté ou opposé au côté d'émission de lumière (FA), un élément de découplage, tel qu'une surface rugueuse ou une surface structurée ou une couche de découplage ou une surface réfléchissante et/ou
**en ce que** les fibres optiques (32a, 32b) comprennent, au niveau du deuxième côté frontal, une structure de surface favorisant la sortie de la lumière, de préférence une surface polie (34a, 34b).

11. Disposition de luminaires (6) selon l'une des revendications 8 à 10,
**caractérisée en ce que**
les réflecteurs (36a, 36b) comprennent une grille à lamelles qui est conçue pour assurer une protection anti-éblouissement contre la lumière réfléchie latéralement.

12. Système de luminaires (1) avec un rail électrique (2), une unité électronique (3), un support (4) et un luminaire (5) selon l'une des revendications 1 à 7 ou une disposition de luminaires (6) selon l'une des revendications 8 à 11,
**caractérisé en ce que**
le rail électrique (2) supporte l'unité électronique (3) et
**en ce que** l'unité électronique (3) supporte le luminaire (5) ou la disposition de luminaires (6) au moyen du support (4).
